# EUROPEAN PATENT APPLICATION

(11) **EP 4 764 935 A1**
(43) Date of publication of application: **24.06.2026**
(21) Application number: 24222847.6
(22) Date of filing: 23.12.2024
(51) Int. Cl.: G06F 30/23, G06F 30/27, G06N 20/00, G06F 111/10, G06F 119/04, G06F 119/14

(54) **A METHOD AND APPARATUS FOR ANALYZING A MECHANICAL COMPONENT**

(71) Applicant: Siemens Energy Global GmbH & Co. KG, 81739 München (DE)
(72) Inventor: Abdallah, Jason, 13591 Berlin (DE); Depeweg, Stefan, 13627 Berlin (DE)

(57) **Abstract**

The invention relates to a computer-implemented method and apparatus for analyzing an operational lifetime of a mechanical component comprising the steps of performing by data processing unit a Finite Element Method, FEM, simulation of the mechanical component to provide a data set used to train an artificial intelligence, AI, model and calculating by the trained artificial intelligence, AI, model output values for predicting a mechanical behavior of the mechanical component at a target time in response to applied input values.

## Description

The invention relates to a computer-implemented method and apparatus used for analyzing an operational lifetime of a mechanical component, in particular to optimize the design of a turbine blade of a turbine.

The optimization of mechanical components such as turbine blades, taking into account geometry and temperature variations, is an extremely time-consuming and complex process. The need to simulate and analyze numerous scenarios requires considerable computing resources and iterative procedures.

A gas turbine and especially its blades is a key component of any gas and oil fired power station. It is therefore important to maximize the length of their design life as a key component for successful utilization. Blades weaknesses can affect the whole process of the energy generation. Therefore, it is important to find out the weakness of turbine blades as quickly as possible. One of the central causes of blades' weaknesses is creep that is the permanent deformation of material under the influence of mechanical stresses and temperature.

However, computationally intensive FEM creep analysis for turbine blade design and service life (creep, TMF) requires typically 1 - 3 days computing time for one analysis. More and more complex FEM models are required (modelling of multiple functionalities, parameterized models, etc.) In addition, geometry and temperature variation play a decisive role in modern product development in order to ensure robust and reliable designs and to explore the resulting design space. Temperature and geometry variation can maximize the performance of the design under different conditions. Temperature variation refers to the deliberate modification and optimization of thermal boundary conditions (cooling air temperature and mass flow, hot gas temperature and profile) and thermal barrier layer thicknesses, distribution and systems. Geometry variation refers to the deliberate modification and optimization of the geometric parameters of a design.

Geometry and temperature variation is a powerful tool for achieving robust designs. By systematically analyzing and optimizing geometric parameters, engineers can develop products that are not only efficient, but also reliable and cost effective. In a world where product requirements are constantly increasing, geometry and temperature variation are an indispensable part of the modern design process.

However, incorporating geometry and temperature variation into an optimization is a complex and time-consuming process and presents significant challenges. In addition to the complexity of the geometry variation, the time-consuming simulation process poses a major problem.

The optimization process is iterative and requires numerous iterations to find the best combinations of geometry and temperature parameters. Each iteration step involves adjusting the parameters, carrying out simulations and evaluating the results. The combination of geometry and temperature variations leads to an exponential increase in the number of scenarios to be analyzed. Each variation must be evaluated using complex numerical simulations and finite element analyses (FEA). These simulations are computationally intensive and require considerable computing resources and time.

Against this background, the object underlying the present invention is to provide a method and an apparatus for analyzing the operational lifetime of a mechanical component where the required processing time is reduced.

According to the invention, this object is solved by a method having the features of claim 1 and/or an apparatus having the features of claim 12.

The invention provides according to a first aspect a computer-implemented method for analyzing an operational lifetime of a mechanical component comprising the steps of: performing a Finite Element Method, FEM, simulation of the mechanical component to provide a data set used to train an artificial intelligence, AI, model; and calculating by the trained artificial intelligence, AI, model output values for predicting a mechanical behavior of the mechanical component at a target time in response to applied input values.

The invention provides according to a second aspect an apparatus for analyzing an operational lifetime of a mechanical component comprising a data processing unit adapted to perform a Finite Element Method, FEM, simulation of the mechanical component to provide a data set used to train an artificial intelligence, AI, model, wherein the trained artificial intelligence, AI, model is adapted to calculate output values for predicting a mechanical behavior of the mechanical component at a target time in response to applied input values.

The invention provides according to a further aspect a mechanical component comprising a design optimized by the computer-implemented method for analyzing an operational lifetime of the mechanical component according to the first aspect of the present invention.

The present invention reduces the required processing time for analyzing a mechanical component and/or to optimize the design of the mechanical component significantly.

With the method and apparatus according to the present invention deep learning approaches can be applied as a FEM surrogate in three dimensions in the context of tertiary creep behavior. The method and apparatus according to the present invention provide initial insights into the dependence of the geometry and the boundary conditions on the expected creep strain and stresses by means of a short FEM simulation. These results are incorporated into the artificial intelligence model in the form of inputs comprising strain, stress and deformation. This saves a large part of the calculation time of the FEM.

The Finite Element Method FEM is a numerical method for solving partial differential equations in two or three space variables (i.e., some boundary value problems). To solve a problem, the FEM can subdivide a large system into smaller, simpler parts called finite elements. This is achieved by a particular space discretization in the space dimensions, which is implemented by the construction of a mesh of the object, i.e. the numerical domain for the solution, which has a finite number of points. The finite element method formulation of a boundary value problem finally results in a system of algebraic equations. The method approximates the unknown function over the domain. The simple equations that model these finite elements are then assembled into a larger system of equations that models the entire problem. The FEM then approximates a solution by minimizing an associated error function via the calculus of variations. Analyzing a phenomenon with FEM is often referred to as finite element analysis (FEA).

Advantageous configurations and developments emerge from the further dependent claims and from the description with reference to the figures of the drawings.

In a possible embodiment of the computer-implemented method for analyzing an operational lifetime of a mechanical component, the output values for predicting the mechanical behavior of the mechanical component comprise a stress, a strain and a deformation for each point of a point cloud representing a geometry of the mechanical component. Stress is defined as a force acting per unit area of an object or component, while strain is stated as the amount of relative deformation caused by the force acting on an object or component. Deformation is a measure of how much an object is stretched. The strain is the ratio between the deformation and the original length. Longitudinal stress, shear stress, and volumetric stress are the different types of stress. Longitudinal strain, shear strain, and volumetric strain are the three types of strain.

In a possible embodiment of the computer-implemented method for analyzing an operational lifetime of a mechanical component, the input values applied to the artificial intelligence, AI, model comprise a temperature at each point of the point cloud.

In a possible embodiment of the computer-implemented method for analyzing an operational lifetime of a mechanical component, the data set comprises an initial data set calculated at an initial time. The initial time can be predefined or adjustable.

In a possible embodiment of the computer-implemented method for analyzing an operational lifetime of a mechanical component the input values applied to the artificial intelligence, AI, model comprise a stress, a strain and a deformation for each point of the point cloud at the predefined initial time.

In a possible embodiment of the computer-implemented method for analyzing an operational lifetime of a mechanical component, the stress comprises a von-Mises scalar or a 6-D tensor.

In a possible embodiment of the computer-implemented method for analyzing an operational lifetime of a mechanical component, the strain comprises a von- Mises scalar or a 6-D tensor.

In a possible embodiment of the computer-implemented method for analyzing an operational lifetime of a mechanical component, the strain comprises a creep strain, a thermal strain, a plastic strain and an elastic strain. Creep is the time-dependent strain induced by a constant mechanical loading. The creep strain is a function of the stress level, the loading time, and the temperature. Creep (sometimes also called cold flow) is the tendency of a solid material to undergo slow deformation while subject to persistent mechanical stresses. Thermal Strain refers to the strain caused inside a material due to changes in its temperature. Elastic strain is reversible, and the material returns to its original shape and size after the stress is removed. In contrast, plastic strain results in permanent deformation.

In a possible embodiment of the computer-implemented method for analyzing an operational lifetime of a mechanical component, during the Finite Element Method, FEM, simulation of the mechanical component geometry and temperature boundary conditions are varied to provide a data set for a set of design candidates.

In a possible embodiment of the computer-implemented method for analyzing an operational lifetime of a mechanical component, the artificial intelligence, AI, model comprises a PointNext Model.

In a possible embodiment of the computer-implemented method for analyzing an operational lifetime of a mechanical component the artificial intelligence, AI, model a PointNet Model.

In a possible embodiment of the computer-implemented method for analyzing an operational lifetime of a mechanical component, the mechanical component comprises a turbine blade of a turbine. The results can be further processed to optimize the design of the turbine blade. In a possible embodiment, the turbine blade is preferably produced by employing additive manufacturing.

A turbine is a machine that produces continuous power in which a wheel or rotor, typically fitted with vanes, is made to revolve by a fast-moving flow of water, steam, gas, wind, or other fluid. Turbines can be classified into various types based on their applications and design features. These classifications include aviation turbines for aircraft propulsion, industrial turbines for power generation and mechanical drive, and marine turbines for ship propulsion.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention, which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- Fig. 1: shows a flowchart of a possible exemplary embodiment of the method according to the first aspect of the present invention;
- Fig. 2: shows a schematic block diagram for illustrating an apparatus for analyzing an operational lifetime of a mechanical component according to the second aspect of the present invention;
- Fig. 3: illustrates hierarchical grouping in a PointNext data model used in a possible embodiment of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

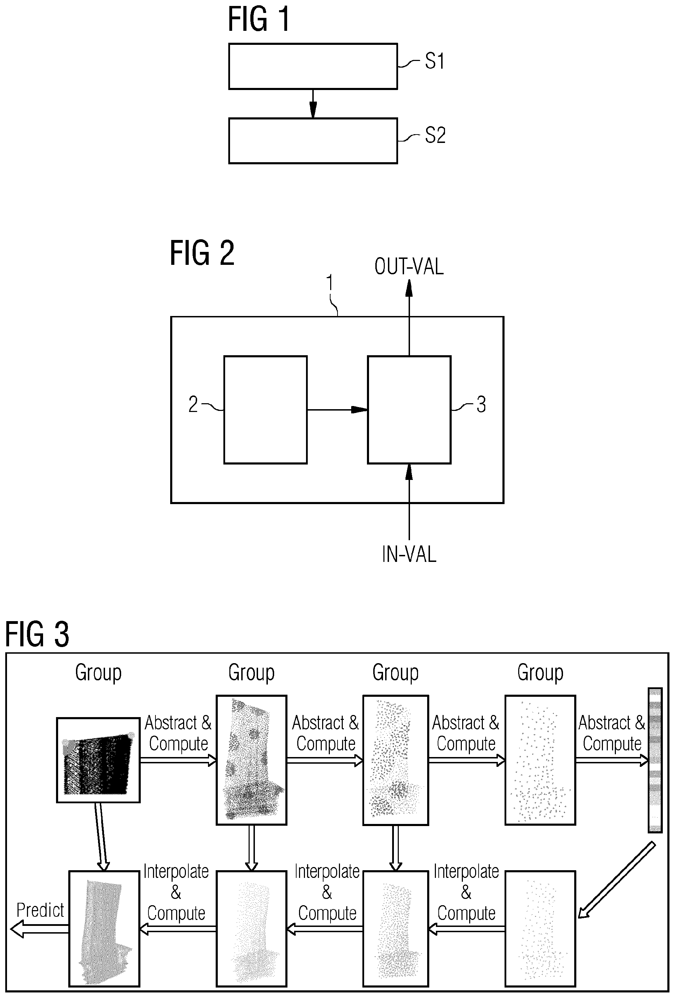

As illustrated in the flow chart of Fig. 1, the computer-implemented method for analyzing an operational lifetime of a mechanical component such as a turbine blade can comprise two main steps.

In a first step S1 of the method a Finite Element Method, FEM, simulation of the mechanical component is performed to provide a data set used to train an artificial intelligence, AI, model 3. The Finite Element Method, FEM, simulation of the mechanical component can be performed by a data processing unit 2 of an apparatus 1 as illustrated in Fig. 2.

In a second step S2 of the method the trained artificial intelligence, AI, model 3 calculates output values OUT-VAL for predicting a mechanical behavior of the mechanical component at a target time in response to applied input values IN-VAL.

In the first step S1 of the method illustrated in Fig. 1 an initial data set is generated by FEM simulations. Here, geometry and temperature boundary conditions can be varied, given the requirements of the robust design task.

In a possible embodiment of the computer-implemented method for analyzing an operational lifetime of a mechanical component during the Finite Element Method, FEM, simulation of the mechanical component in step S1 geometry and temperature boundary conditions are varied to provide a data set for a set of design candidates. Finite Element Analysis can be used to simulate the various mechanical, thermal, and fatigue conditions the mechanical component experiences during operation.

A training of the AI surrogate model 3 is performed using the generated initial data set. The following variables are relevant for the approach:
- A geometry of the mechanical component is conceptualized as a point cloud consisting of coordinates of dimension (N, d) where N is the number of points, and d is the dimensionality (generally d=3)
- A temperature is provided at each point of the point cloud.
- The stress at each node can either be understood as a von-Mises scalar or as a 6-D tensor.
- The creep strain at each node can be calculated as the equivalent creep strain taking into account the material data.
- The total strain (contains thermal, elastic and plastic strain) can be understood either as a von-Mises scalar or as a 6-D tensor.

Accordingly, a data set is given for a set of design candidates in which geometry and/or boundary conditions are varied. For each design candidate, the above-mentioned variables are contained over a time (0,...,T) where T is the maximum time step. As mentioned above, this data comes from FEM simulation performed in method step S1.

In a possible embodiment of the computer-implemented method, the data set comprises an initial data set calculated in method step S1 at a predefined initial time which can be predefined or set via a user interface.

In a possible embodiment of the computer-implemented method, the output values OUT-VAL for predicting the mechanical behavior of the mechanical component calculated in method step S2 comprise a stress, a strain and a deformation for each point of a point cloud representing a geometry of the investigated or monitored mechanical component.

In a possible embodiment of the computer-implemented method for analyzing an operational lifetime of a mechanical component the input values IN-VAL applied to the artificial intelligence, AI, model in method step S2 comprise a temperature at each point of the point cloud. The input values IN-VAL applied to the artificial intelligence, AI, model in method step S2 can further comprise a stress, a strain and a deformation for each point of the point cloud at the predefined or set initial time. The strain can comprise a creep strain, a thermal strain, a plastic strain and an elastic strain.

Stress, strain, and deformation are interrelated mechanical concepts that describe how materials and structures respond to external forces. They all arise when a mechanical component is subjected to loads (forces, pressures, or moments), and they collectively describe the internal and external changes that occur within the material of the component. Stress is the internal force per unit area resisting external loads, strain is the relative deformation (change in shape or size) caused by stress, and deformation is the physical change in the structure. Together, they describe how a mechanical component responds to external forces and loads.

Initially in method step S1 of the method according to the present invention using FEA (Finite Element Analysis), a first time step is calculated under full speed full load. This time step can be for instance '10 minutes'. While the entire FEA simulation can e.g. simulate periods of 10-15 years and takes up to 1 to 3 days depending on the complexity of the mechanical component and model size, this first time step calculates 10 minutes of service life and takes about 20-40 minutes of calculation time. This results in initial stress, deformation and total strain states for each node of the mesh.

Definition of the learning problem (brackets indicate dimensions of the respective size):
Input:
   - Geometry in the form of a point cloud (x, y, z) (N, 3)
   - Temperature (N, 1)
   - Target time at which the prediction is to be made (t) (N, 1)
   - Total strain (N, 1) or (N, 6) at the first time point mentioned above (t=0.1)
   - Von Mises stress (N, 1) or (N, 6) at the above-mentioned first time point (t=0.1)
   - Initial deformation (N, 3) at the above first time point (t=0.1)
Output:
   - Stress at target time (t) (N,1) or (N,6)
   - Strain at target time (t) (N,1) or (N,1)
   - Deformation at target time (t) (N,3)

There are different configuration options:
(N,1) == von-Mises stress (scalar value)
(N,6) == stress matrix for isotropic materials
(N,9) == stress matrix for anisotropic materials

Training of the artificial intelligence AI model 3 is performed by minimizing the error between the forecast and actual values. For the prediction, the initial time step is first calculated in method step S1 of the method using FEA and then input values IN-VAL are applied to the trained artificial intelligence AI model 3 in method step S2 to obtain the desired prediction of stress, strain and deformation at the desired target time as output values OUT-VAL.

The predictions calculated by the artificial intelligence AI model in step S2 can help in determining when the turbine blade should be inspected or replaced, how the turbine blade performs under different loads or environmental conditions, which can influence operating conditions (e.g., limiting temperature or speed to extend life) and can suggest how the material or blade geometry can be optimized to improve its service life.

The artificial intelligence AI model 3 can in a possible embodiment make use of a deep learning approach based on PointNext architecture. PointNext is a hierarchical point-cloud based approach by modelling geometries hierarchically as illustrated in Fig.3.

The PointNext data model refers to the way the PointNext architecture processes and represents point cloud data in 3D space for various tasks such as predictions. In a broader sense, a "data model" in deep learning refers to how input data is structured, how features are extracted, and how the architecture transforms this data throughout the artificial neural network.

The point cloud consists of a set of 3D points, each represented by its spatial coordinates (x, y, z). The point cloud is unordered, meaning that the sequence of points does not carry any specific meaning. The PointNext model, like other models built on PointNet++ foundations, can process point clouds using local feature aggregation to extract meaningful patterns from the data.

The key components of this process comprise:
- Neighborhood Sampling: For each point in the cloud, PointNext is capable to compute a local neighborhood by identifying nearby points using a spatial radius or using a K-nearest neighbors (KNN) approach.
- Local Aggregation: Within each neighborhood, the PointNext model applies a shared MLP (Multi-Layer Perceptron) to each point to extract point-wise features. The features of neighboring points are aggregated to form a local representation for each point. This process captures local geometric structures, unlike PointNet, which only focuses on global features.
- Hierarchical Grouping: PointNext builds hierarchical layers, similar to convolutional layers in CNNs. Each layer processes the point cloud at different levels of abstraction, from local point-wise features to broader, global context representations (as also illustrated in Fig. 3) .
- Residual Connections: PointNext uses residual connections to help the model learn deeper representations without suffering from vanishing gradients, allowing the model to better handle complex data.

The PointNext model can learn features at different spatial scales, which is crucial for 3D point clouds, as the objects or components can vary in size, orientation, and density.

These key features comprise:
- Global Features: Captures the overall structure of the object.
- Local Features: Focuses on the fine-grained details of the point cloud, such as edges, surfaces, and small geometric details.
- Multi-Scale Aggregation: PointNext aggregates features from different scales (similar to how CNNs use different receptive field sizes) to ensure both local and global information is captured effectively.

The PointNext model applies hierarchical feature learning, where:
- The network starts by learning low-level features (e.g., edges, small surfaces) from small neighborhoods of points.
- As the network goes deeper, it progressively learns higher-level features by merging information from larger neighborhoods and larger subsets of the point cloud.
- This allows the network to effectively capture both local geometry (important for segmentation tasks) and global context (important for classification and object recognition tasks).

The PointNext Model is permutation invariant:
- Since the input point cloud is an unordered set, PointNext ensures that its output is independent of the order of points. The model achieves this by using symmetry functions, typically in the form of max-pooling or other aggregation functions, to merge information across points.
- This property ensures that regardless of the input point cloud's order, the model produces the same result, an essential characteristic for point cloud processing.

The PointNext model improves upon earlier point cloud models like PointNet by introducing a more advanced data model that incorporates local neighborhood learning, multi-scale feature aggregation, and residual connections, resulting in better performance across a wide range of 3D tasks.

The artificial intelligence model 3, in particular a PointNext model is trained using data from previously calculated FEM simulations.

In an alternative variant of the method according to the present invention the stress, strain and deformation are predicted directly from the geometry and temperature. The architecture in this case is as follows:
Input:
   - Geometry in the form of a point cloud (x, y, z) (N, d)
   - Temperature (N, 1)
   - Target time at which the prediction is to be made (t) (N, 1)
Output:
   - Stress at the target time (t) (N,1) or (N,6)
   - Strain at the target time (t) (N,1) or (N,1)
   - Deformation at target time (t) (N,3)

On one hand, this alternative variant simplifies the architecture (it is no longer necessary to calculate an FEA at the time of training and prediction, it is sufficient to have an initial FEA data set), but on the other hand this variant also makes the learning problem more difficult. Calculating from the initial time (e.g. t=0.1) provides insights into the effects of stresses, strains and deformations depending on the geometry right from the start.

With the method according to the present invention, 3D deep learning approaches can be applied as FEM surrogate in 3D in the context of tertiary creep behavior. The method according to the present invention provides initial insights into the dependence of the geometry and the boundary conditions on the expected creep strain and stresses by means of a short FEM simulation. These results are incorporated into the AI model 3 in the form of inputs comprising total strain (t=0.1), stress (t=0.1) and deformation (t=0.1). This saves a large part of the calculation time of the FEM (to calculate up to step 0.1 with FEM takes approx. 0.5 to 1 hour, to calculate all steps would take 1 to 3 days).

Fig. 2 illustrates schematically in a block diagram a possible embodiment of an apparatus 1 for analyzing an operational lifetime of a mechanical component, in particular a turbine blade. The apparatus 1 comprises a data processing unit 2 adapted to perform a Finite Element Method, FEM, simulation of the mechanical component to provide an initial data set used to train an artificial intelligence, AI, model 3. The trained artificial intelligence, AI, model 3 is adapted to calculate output values OUT-VAL for predicting a mechanical behavior of the mechanical component at a target time in response to applied input values IN-VAL.

The invention provides according to a further aspect a mechanical component comprising a design optimized by the computer-implemented method for analyzing an operational lifetime of the mechanical component according to the first aspect of the present invention. The mechanical component can for instance comprise a turbine blade of a gas turbine or any other kind of mechanical component within an industrial system.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

## Claims

1. A computer-implemented method for analyzing an operational lifetime of a mechanical component, the method comprising:
performing (S1) a Finite Element Method, FEM, simulation of the mechanical component to provide a data set used to train an artificial intelligence, AI, model; and
calculating (S2) by the trained artificial intelligence, AI, model output values (OUT-VAL) for predicting a mechanical behavior of the mechanical component at a target time in response to applied input values (IN-VAL).

2. The method according to claim 1, wherein the output values (OUT-VAL) for predicting the mechanical behavior of the mechanical component comprise a stress, a strain and a deformation for each point of a point cloud representing a geometry of the mechanical component.

3. The method according to claim 1, wherein the input values (IN-VAL) applied to the artificial intelligence, AI, model comprise a temperature at each point of the point cloud.

4. The method according to claim 1, wherein the data set comprises an initial data set calculated at a predefined initial time.

5. The method according to claim 4, wherein the input values (IN-VAL) applied to the artificial intelligence, AI, model comprise a stress, a strain and a deformation for each point of the point cloud at the predefined initial time.

6. The method according to claim 5, wherein the stress comprises a von-Mises scalar or a 6-D tensor.

7. The method according to claim 5 or 6, wherein the strain comprises a von-Mises scalar or a 6-D tensor.

8. The method according to any of the preceding claims, wherein the strain comprises a creep strain, a thermal strain, a plastic strain and an elastic strain.

9. The method according to any of the preceding claims, wherein during the Finite Element Method, FEM, simulation of the mechanical component geometry and temperature boundary conditions are varied to provide a data set for a set of design candidates.

10. The method according to any of the preceding claims, wherein the artificial intelligence, AI, model comprises a PointNext Model or a PointNet Model.

11. The method according to any of the preceding claims, wherein the mechanical component comprises a turbine blade of a turbine.

12. An apparatus (1) for analyzing an operational lifetime of a mechanical component comprising a data processing unit (2) adapted to perform a Finite Element Method, FEM, simulation of the mechanical component to provide a data set used to train an artificial intelligence, AI,(2), wherein the trained artificial intelligence, AI, model is adapted to calculate output values (OUT-VAL) for predicting a mechanical behavior of the mechanical component at a target time in response to applied input values (IN-VAL).

13. The apparatus according to claim 12, wherein the artificial intelligence, AI, model (3) comprises a PointNext Model or a PointNet Model.

14. A mechanical component comprising a design optimized by the computer-implemented method for analyzing an operational lifetime of the mechanical component according to any of the claims 1 to 11.

15. The mechanical component according to claim 14, wherein the mechanical component comprises or is a turbine blade of a turbine.
